(19) Europäisches Patentamt
European Patent Office
Office européen des brevets

(11) EP 1 661 934 A1

(12) # EUROPEAN PATENT APPLICATION

(43) Date of publication:
**31.05.2006 Bulletin 2006/22**

(51) Int Cl.:
***C08G 77/60*** *(2006.01)*

(21) Application number: **05025714.6**

(22) Date of filing: **24.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **26.11.2004 JP 2004342145**

(71) Applicant: **JSR Corporation**
**Tokyo 104-8410 (JP)**

(72) Inventors:
- **Nakagawa, Hisashi**
**Tokyo 104-8410 (JP)**
- **Akiyama, Masahiro**
**Tokyo 104-8410 (JP)**
- **Kurosawa, Takahiko**
**Tokyo 104-8410 (JP)**
- **Shiota, Atsushi**
**Tokyo 104-8410 (JP)**

(74) Representative: **TBK-Patent**
**Bavariaring 4-6**
**80336 München (DE)**

(54) **Polycarbosilane and method of producing the same, film-forming composition, and film and method of forming the same**

(57) A method of producing a polycarbosilane includes reacting (A) a polycarbosilane having a silicon-hydrogen bond and (B) a compound having a carbon-carbon multiple bond to which a silicon-hydrogen bond may be added.

EP 1 661 934 A1

## Description

### BACKGROUND OF THE INVENTION

The present invention relates to a novel polycarbosilane and a method of producing the same, a film-forming composition, and a film and a method of forming the same.

A method of producing a polycarbosilane film insoluble in a solvent by sintering a polycarbosilane in an inert gas atmosphere or under reduced pressure has been reported (United States Patent No. 6,489,030 and JP-T-2003-501518). However, since the reported polycarbosilane contains a large number of hydrogen substituents on silicon atoms, a dehydrogenation reaction tends to occur due to heat, so that silicon-silicon bond formation or crosslinking occurs relatively easily.

In order to provide a polycarbosilane with crosslinking properties, a method of hydrosilylating a polycarbosilane by reacting a polycarbosilane with a compound having carbon-carbon unsaturated bonds has been reported (e.g. United States Patent No. 5,171,792 and United States Patent No. 5,260,377). However, the hydrosilylated polycarbosilane is not suitable for hard mask applications such as an etching stopper or a CMP stopper, since carbon chains continue in the repeating structure in the main chain.

On the other hand, since a polycarbosilane obtained from polydimethylsilane or the like through a thermal rearrangement reaction contains a relatively large number of carbon-silicon bonds, such a polycarbosilane exhibits excellent etching resistance and solvent resistance and is suitable for hard mask applications. In order to obtain a film insoluble in a solvent from a polycarbosilane obtained through a thermal rearrangement reaction, it is necessary to sinter the polycarbosilane in an oxidizing atmosphere. However, since a reaction in an oxidizing atmosphere may cause a metal interconnect in a laminate to deteriorate, it is desirable to avoid such a reaction.

### SUMMARY

The invention may provide a novel polycarbosilane which can be insolubilized by application of high energy rays or heating in an inert gas atmosphere or under reduced pressure and can produces a low-relative-dielectric-constant film exhibiting excellent etching resistance, solvent resistance, and mechanical strength, and a method of producing the same.

The invention may also provide a film-forming composition including the novel polycarbosilane, a film using the novel polycarbosilane, and a method of forming the same.

A method of producing a polycarbosilane according to a first aspect of the invention comprises reacting (A) a polycarbosilane having a silicon-hydrogen bond and (B) a compound having a carbon-carbon multiple bond to which a silicon-hydrogen bond may be added.

In this aspect, the reaction may be carried out by stirring the components in (C) an organic solvent with heating.

In this aspect, the reaction may be hydrosilylation.

In this aspect, the polycarbosilane (A) may have a main chain in which silicon atoms and carbon atoms are alternately repeated, and may include a repeating unit shown by the following general formula (1) and a repeating unit shown by the following general formula (2).

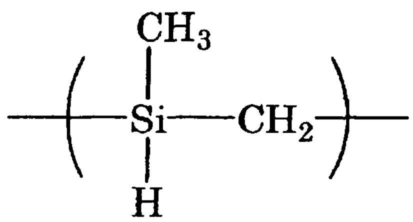

(1)

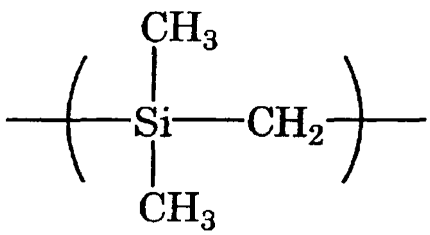

(2)

In this aspect, the polycarbosilane (A) further may further include at least one of repeating units shown by the following general formulas (3) to (5).

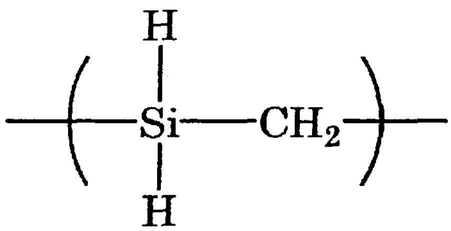

(3)

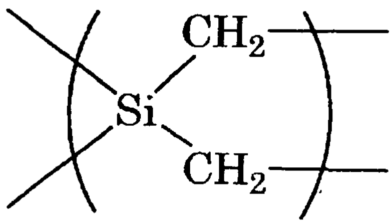

(4)

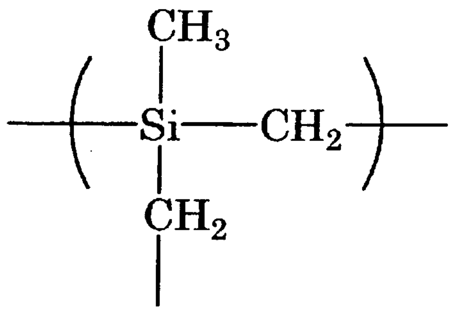

(5)

In this case, in the polycarbosilane (A), a ratio of a number of carbon atoms bonded to silicon atoms to a number of silicon atoms may be two or more. Furthermore, the polycarbosilane (A) may have a weight average molecular weight of 300 to 1,000,000 and may be soluble in an organic solvent. Furthermore, the polycarbosilane (A) may be obtained by a mechanism including a rearrangement reaction of polydimethylsilane.

The compound (B) may have at least two carbon-carbon multiple bonds.

The compound (B) may be a polymer having a weight average molecular weight of 300 to 1,000,000.

A polycarbosilane according to a second aspect of the invention is produced by using the above method. In this aspect, the polycarbosilane may be produced by removing a component having a weight average molecular weight of 500 or less from the above polycarbosilane.

A film-forming composition according to a third aspect of the invention comprises the above polycarbosilane.

This film-forming composition may include the above polycarbosilane and (E) a solvent.

A method of forming a film according to a fourth aspect of the invention comprises applying the above film-forming composition to a substrate to form a film, and heating the film.

In this aspect, the heating step may be performed in an inert gas atmosphere or under reduced pressure. The term "inert gas" used herein refers to gas which is inert to the novel polycarbosilane included in the film-forming composition during film formation.

A method of forming a film according to a fifth aspect of the invention comprises applying the above film-forming composition to a substrate to form a film, and applying high energy rays to the film.

A film according to a sixth aspect of the invention is formed by using any one of the above methods of forming a film.

With the method of producing a polycarbosilane according to the first aspect of the invention, a polycarbosilane can be produced by including reacting (A) a polycarbosilane having a silicon-hydrogen bond and (B) a compound having a carbon-carbon multiple bond to which a silicon-hydrogen bond may be added. A film having a low relative dielectric constant and exhibiting etching resistance and solvent resistance can be obtained by forming a film by using the novel polycarbosilane, and curing the film by applying high energy rays, or sintering the film in an inert gas atmosphere or under reduced pressure.

Since the film-forming composition according to the third aspect of the invention includes the novel polycarbosilane, a film having a low relative dielectric constant and exhibiting etching resistance and solvent resistance can be obtained.

Since the method of forming a film according to the fourth aspect of the invention includes applying the above film-forming composition to a substrate to form a film and heating the film, a film having a low relative dielectric constant and exhibiting etching resistance and solvent resistance can be obtained.

Since the method of forming a film according to the fifth aspect of the invention includes applying the above film-forming composition to a substrate to form a film and applying high energy rays to the film, a film having a low relative dielectric constant and exhibiting etching resistance and solvent resistance can be easily formed.

Since the film according to the sixth aspect of the invention is obtained by using one of the above film formation methods, the film has a low relative dielectric constant and exhibits excellent etching resistance and solvent resistance.

DETAILED DESCRIPTION OF THE EMBODIMENT

A novel polycarbosilane and a method of producing the same according to embodiments of the invention are

described below.

1. Method of producing novel polycarbosilane

A method of producing a novel polycarbosilane according to one embodiment of the invention includes reacting (A) a polycarbosilane having a silicon-hydrogen bond (hereinafter may be called "carbosilane (A)") and (B) a compound having a carbon-carbon multiple bond to which a silicon-hydrogen bond may be added (hereinafter may be called "compound (B)").

The reaction may be carried out by stirring the components in (C) an organic solvent with heating. The heating temperature may be appropriately determined depending on the types and concentrations of the polycarbosilane (A) and the compound (B) and the type of the organic solvent (C). The reaction may be hydrosilylation. In this case, the carbon-carbon multiple bond in the compound (B) is hydrosilylated.

The compounds used in the method of producing a novel polycarbosilane according to one embodiment of the invention are described below.

1.1 Polycarbosilane (A)

The polycarbosilane (A) is a polycarbosilane having a silicon-hydrogen bond. The polycarbosilane (A) may have a main chain in which silicon atoms and carbon atoms are alternately repeated, and include a repeating unit shown by the following general formula (1) and a repeating unit shown by the following general formula (2). The repeating units shown by the general formula (1) and the repeating units shown by the general formula (2) may be individually repeated, or the repeating units shown by the general formula (1) and the repeating units shown by the general formula (2) may be alternately repeated.

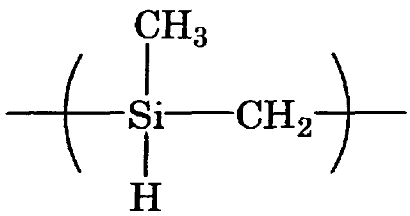

(1)

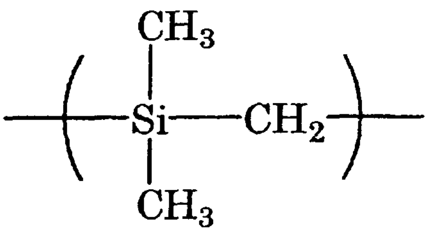

(2)

In one embodiment of the invention, the "main chain in which silicon atoms and carbon atoms are alternately repeated" has a structure shown by the following general formula (6), for example. In the general formula (6), side chains bonded to the main chain are omitted. The number of silicon atoms and carbon atoms included in the main chain is not limited to that shown in the general formula (6). The type of side chain bonded to the main chain is not particularly limited. For example, the side chain may be -H, -OH, -CRR'R" (R, R', and R" individually represent a hydrogen atom or an alkyl

group having 1 to 6 carbon atoms, for example):

— SiC—Si—C—Si—C—Si—C— (6)

In the polycarbosilane (A), it is preferable that the number of repeating units shown by the general formula (1) be 5 to 50% of the total number of repeating units shown by the general formulas (1) and (2).

The polycarbosilane (A) may further include at least one of the repeating units shown by the following general formulas (3) to (5). The repeating units shown by the general formulas (3) to (5) may be individually repeated, or, when the polycarbosilane (A) includes at least two of the repeating units shown by the general formulas (3) to (5), the repeating units may be alternately repeated.

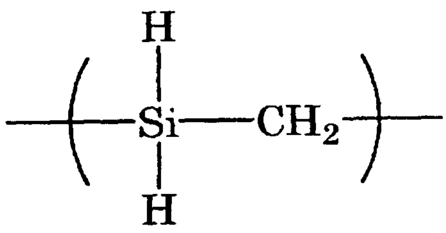

(3)

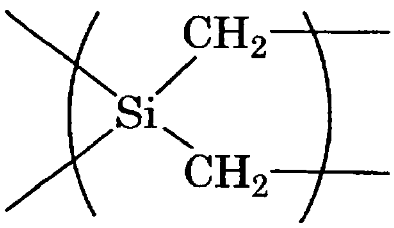

(4)

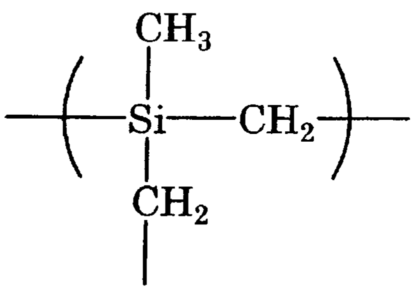

(5)

In the polycarbosilane (A), it is preferable that the ratio of the number of carbon atoms bonded to silicon atoms

to the number of silicon atoms be two or more. If the ratio of the number of carbon atoms bonded to silicon atoms to the number of silicon atoms is less than two, etching resistance and chemical resistance may be insufficient.

It is preferable that the polycarbosilane (A) be soluble in an organic solvent and have a weight average molecular weight of preferably 300 to 1,000,000, and still more preferably 500 to 100,000. If the weight average molecular weight is less than 300, the polymer may volatilize during sintering. If the weight average molecular weight exceeds 1,000,000, the polymer becomes insoluble in a solvent so that a film composition may not be obtained. The polycarbosilane (A) may be obtained by a mechanism including a rearrangement reaction of polydimethylsilane. If the polycarbosilane (A) is obtained by this mechanism, a film exhibiting excellent etching resistance and solvent resistance can be formed.

In the polycarbosilane (A), a hydrogen atom and a silicon atom which bonds to the hydrogen atom in the repeating units shown by the general formulas (1) and (2) may bond to the carbon atom of the carbon-carbon multiple bond. When the polycarbosilane

(A) includes the repeating unit shown by the general formula (5), the carbon atom of methylene ($-CH_2-$) in the general formula (5) may bond to an oxygen atom, a silicon atom, or a carbon atom.

As examples of the polycarbosilane (A), poly(silylenemethylene), poly(methylsilylenemethylene), poly(ethylsilyleneethylene), poly(propylsilylenemethylene), poly(isopropylsilylenemethylene), poly(butylsilylenemethylene), poly (sec-butylsilylenemethylene), poly(tert-butylsilylenemethylene), poly(vinylsilylenemethylene), poly(allylsilylenemethylene), poly(phenylsilylenemethylene), poly(silyleneethylene), poly(methylsilyleneethylene), poly(ethylsilyleneethylene), poly(propylsilyleneethylene), poly(isopropylsilyleneethylene), poly(butylsilyleneethylene), poly(sec-butylsilyleneethylene), poly(tert-butylsilyleneethylene), poly(vinylsilyleneethylene), poly(allylsilyleneethylene), poly(phenylsilyleneethylene), poly(silylenepropylene), poly(methylsilylenepropylene), poly(ethylsilyleneethylene), poly(propylsilylenepropylene), poly(isopropylsilylenepropylene), poly(butylsilylenepropylene), poly(sec-butylsilylenepropylene), poly(tert-butylsilylenepropylene), poly(vinylsilylenepropylene), poly(allylsilylenepropylene), poly(phenylsilylenepropylene), poly(silylenebutylene), poly(methylsilylenebutylene), poly(ethylsilylenebutylene), poly(propylsilylenebutylene), poly(isopropylsilylenebutylene), poly(butylsilylenebutylene), poly(sec-butylsilylenebutylene), poly(tert-butylsilylenebutylene), poly(vinylsilylenebutylene), poly(allylsilylenebutylene), poly(phenylsilylenebutylene), poly(silylenemethylmethylene), poly(methylsilylenemethylmethylene), poly(ethylsilylenemethylmethylene), poly(propylsilylenemethylmethylene), poly(isopropylsilylenemethylmethylene), poly(butylsilylenemethylmethylene), poly(sec-butylsilylenemethylmethylene), poly(tert-butylsilylenemethylmethylene), poly(vinylsilylenemethylmethylene), poly(allylsilylenemethylmethylene), poly(phenylsilylenemethylmethylene), poly(silylenedimethylmethylene), poly(methylsilylenedimethylmethylene), poly(ethylsilylenedimethylmethylene), poly(propylsilylenedimethylmethylene), poly(isopropylsilylenedimethylmethylene), poly (butylsilylenedimethylmethylene), poly(sec-butylsilylenedimethylmethylene), poly(tert-butylsilylenedimethylmethylene), poly(vinylsilylenedimethylmethylene), poly(allylsilylenedimethylmethylene), poly(phenylsilylenedimethylmethylene), and the like can be given.

As examples of the polycarbosilane (A), polycarbosilanes shown by the following formulas (7) to (14) can be given. In the polycarbosilanes shown by the general formulas (7) to (14), the repeating units may be randomly arranged, alternately arranged, or continuously arranged.

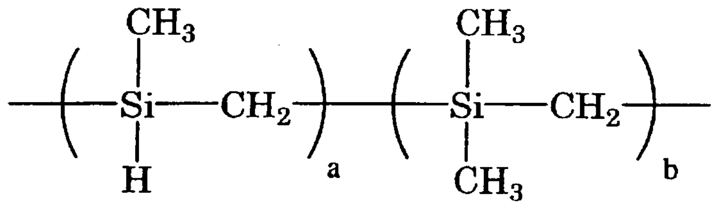

(7)

wherein a and b individually represent integers of one or more.

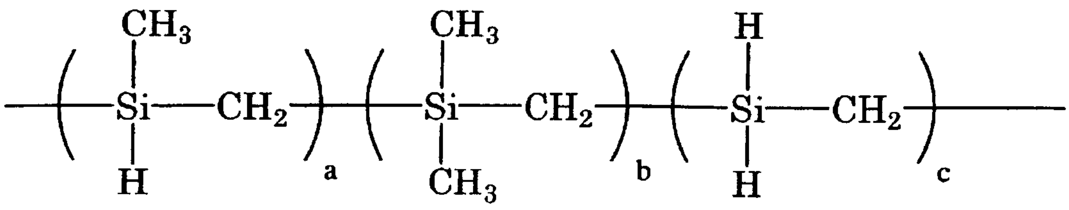

(8)

wherein a, b, and c individually represent integers of one or more.

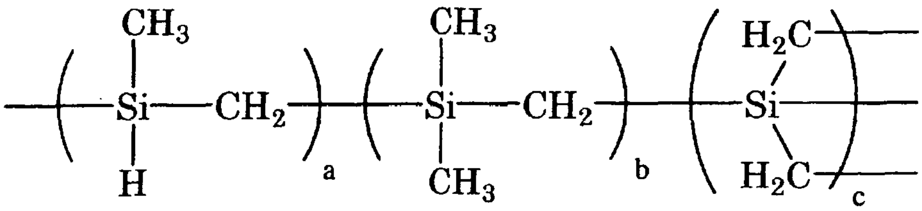

(9)

wherein a, b, and c individually represent integers of one or more.

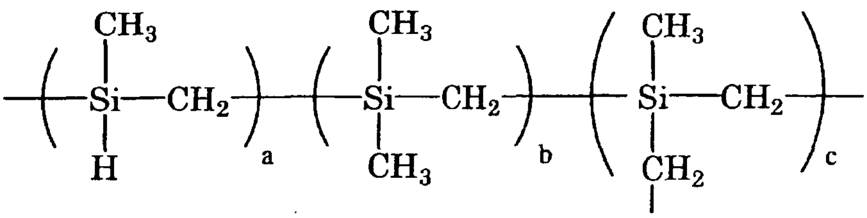

(10)

wherein a, b, and c individually represent integers of one or more.

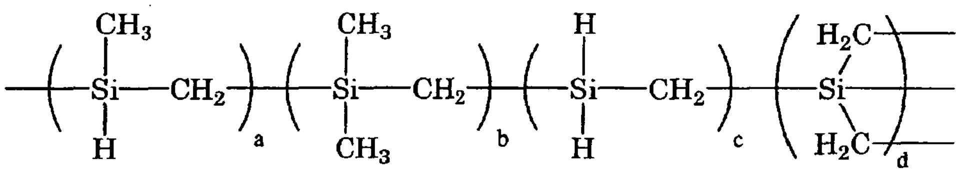

(11)

wherein a, b, c, and d individually represent integers of one or more.

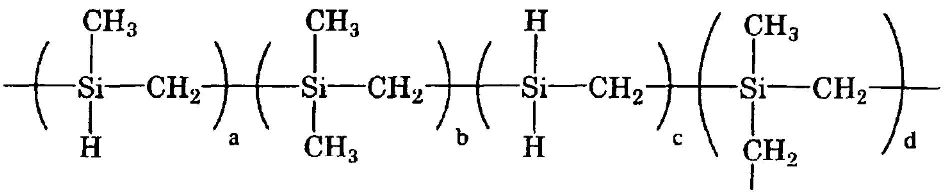

(12)

wherein a, b, c, and d individually represent integers of one or more.

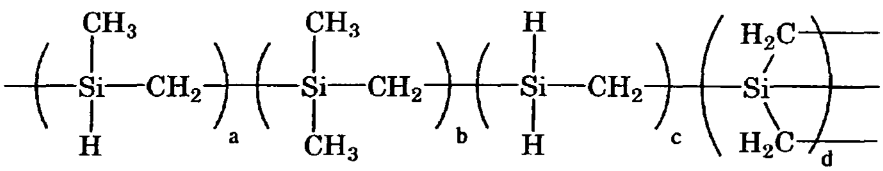

(13)

wherein a, b, c, and d individually represent integers of one or more.

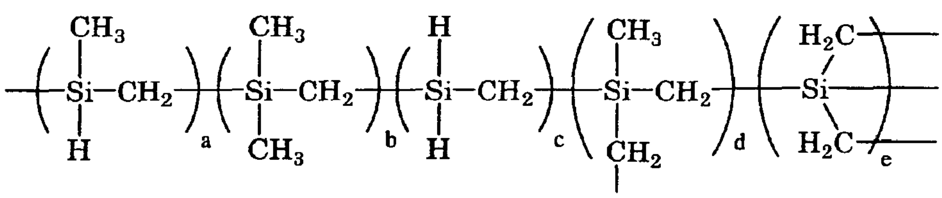

(14)

wherein a, b, c, d, and e individually represent integers of one or more.

1.2 Compound (B)

The compound (B) may be a compound having a carbon-carbon multiple bond to which a silicon-hydrogen bond may be added. Specifically, the silicon-hydrogen bond included in the polycarbosilane (A) may be added to the carbon-carbon multiple bond of the compound (B). The term "carbon-carbon multiple bond" used herein refers to a carbon-carbon double bond and/or a carbon-carbon triple bond.

The number of carbon-carbon multiple bonds in the compound (B) is not particularly limited. It is preferable that the compound (B) include at least two carbon-carbon multiple bonds. In this case, the compound (B) may include at least one of a carbon-carbon double bond and a carbon-carbon triple bond.

The compound (B) may be a polymer or a compound other than a polymer. When the compound (B) is a polymer, the compound (B) preferably has a weight average molecular weight of 300 to 1,000,000.

As examples of the compound (B), 1,3-butadiene, 1,3-pentadiene, 1,4-pentadiene, 1,3-hexadiene, 1,4-hexadiene, 1,5-hexadiene, 1,3,5-hexatriene, 1,3,5-hexatriene, 1,3-butadiene, 2-methyl-1,3-butadiene, 2,3-dimethyl-1,3-butadiene, 1,2-divinylbenzene, 1,3-divinylbenzene, 1,4-divinylbenzene, 1,3,5-trivinylbenzene, 1,2-diethynylbenzene, 1,3-diethynylbenzene, 1,4-diethynylbenzene, 1,3,5-triethynylbenzene, divinylsilane, methyldivinylsilane, dimethyldivinylsilane, trivinylsilane, methyltrivinylsilane, tetravinylsilane, diallylsilane, methyldiallylsilane, triallylsilane, dimethyldiallylsilane, methyltriallylsilane, tetraallylsilane, 1,2-bis(vinyldimethylsilyl)benzene, 1,3-bis(vinyldimethylsilyl)benzene, 1,4-bis (vinyldimethylsilyl)benzene, 1,2-bis(divinylmethylsilyl)benzene, 1,3-bis(divinylmethylsilyl)benzene, 1,4-bis(divinylmethylsilyl)benzene, 1,2-bis(trivinylsilyl)benzene, 1,3-bis(trivinylsilyl)benzene, 1,4-bis(trivinylsilyl)benzene, poly(vinylsilylenebutylene), poly(allylsilylenebutylene), poly(vinylsilylenemethylmethylene), poly(allylsilylenemethylmethylene), poly(divinylsilylenemethylene), poly(diallylsilylenemethylene), and the like can be given.

1.3 Organic solvent (C)

The organic solvent (C) which may be used for the reaction of the polycarbosilane (A) and the compound (B) may be appropriately selected depending on the types of the polycarbosilane (A) and the compound (B) and the reaction conditions such as the reaction temperature. As examples of the organic solvent (C), aliphatic hydrocarbon solvents such as n-pentane, i-pentane, n-hexane, i-hexane, n-heptane, i-heptane, 2,2,4-trimethylpentane, n-octane, i-octane, cyclohexane, and methylcyclohexane; aromatic hydrocarbon solvents such as benzene, toluene, xylene, ethylbenzene, trimethylbenzene, methylethylbenzene, n-propylebenzene, i-propylebenzene, diethylbenzene, i-butylbenzene, triethylbenzene, di-i-propylbenzene, n-amylnaphthalene, and trimethylbenzene; ketone solvents such as acetone, methyl ethyl ketone, methyl n-propyl ketone, methyl n-butyl ketone, diethyl ketone, methyl i-butyl ketone, methyl n-pentyl ketone, ethyl n-butyl ketone, methyl n-hexyl ketone, di-i-butyl ketone, trimethylenonane, cyclohexanone, 2-hexanone, methylcyclohexanone, 2,4-pentanedione, acetonylacetone, diacetone alcohol, acetophenone, and fenchone; ether solvents such as ethyl ether, i-propyl ether, n-butyl ether, n-hexyl ether, 2-ethylhexyl ether, ethylene oxide, 1,2-propylene oxide, dioxolane, 4-methyl dioxolane, dioxane, dimethyl dioxane, ethylene glycol monomethyl ether, ethylene glycol monoethyl ether, ethylene glycol diethyl ether, ethylene glycol mono-n-butyl ether, ethylene glycol mono-n-hexyl ether, ethylene glycol monophenyl ether, ethylene glycol mono-2-ethyl butyl ether, ethylene glycol dibutyl ether, diethylene glycol monomethyl ether, diethylene glycol dimethyl ether (diglyme), diethylene glycol monoethyl ether, diethylene glycol diethyl ether, diethylene glycol mono-n-butyl ether, diethylene glycol di-n-butyl ether, diethylene glycol mono-n-hexyl ether, ethoxy triglycol, tetraethylene glycol di-n-butyl ether, tripropylene glycol monomethyl ether, tetrahydrofuran, and 2-methyltetrahydrofuran; nitrogen-containing solvents such as N-methylformamide, N,N-dimethylformamide, N,N-dimethylformamide, acetamide, N-methylacetamide, N,N-dimethylacetamide, N-methylpropioneamide, and N-methylpyrrolidone; sulfur-containing solvents such as dimethyl sulfide, diethyl sulfide, thiophene, tetrahydrothiophene, dimethylsulfoxide, sulfolane, and 1,3-propanesultone; and the like can be given. These solvents may be used either individually or in combination of two or more.

1.4 Reaction example

As a reaction example of the polycarbosilane (A) and the compound (B), the polycarbosilane (A) may be a polycarbosilane having a structure shown by the general formula (7), the compound (B) may be dimethyldivinylsilane, and the reaction of the polycarbosilane (A) and the compound (B) may be hydrosilylation. It is preferable that the polycarbosilane (A) be in excess over the compound (B) (dimethyldivinylsilane). It should be noted that the reaction mechanism of the polycarbosilane (A) and the compound (B) is not limited to this reaction example.

2. Novel polycarbosilane

A novel polycarbosilane according to one embodiment of the invention may be obtained by the above-described method. Another novel polycarbosilane according to one embodiment of the invention may be obtained by removing a component having a weight average molecular weight of 500 or less (low-molecular-weight component) from the novel polycarbosilane obtained by the above-described method. Specifically, the low-molecular-weight component has been removed from the novel polycarbosilane. Therefore, a film exhibiting excellent etching resistance and solvent resistance and having a low relative dielectric constant can be obtained by forming a film by using a film-forming composition including the novel polycarbosilane.

3. Film-forming composition

A film-forming composition according to one embodiment of the invention includes the above novel polycarbosilane. The film-forming composition according to one embodiment of the invention may include the above novel polycarbosilane and (E) a solvent.

As the solvent (E) which may be used in the film-forming composition according to one embodiment of the invention, solvents given below may be used either individually or in combination of two or more. As a specific example of the solvent (E), a nonprotic solvent can be given. As examples of the nonprotic solvent, a ketone solvent, an ester solvent, an ether solvent, an amide solvent, and other nonprotic solvents described later can be given.

As examples of the ketone solvent, acetone, methyl ethyl ketone, methyl n-propyl ketone, methyl n-butyl ketone, diethyl ketone, methyl i-butyl ketone, methyl n-pentyl ketone, ethyl n-butyl ketone, methyl n-hexyl ketone, di-i-butyl ketone, trimethylnonane, cyclohexanone, methylcyclohexanone, 2,4-pentanedione, acetonylacetone, acetophenone, and fenchone, â-diketones such as acetylacetone, 2,4-hexanedione, 2,4-heptanedione, 3,5-heptanedione, 2,4-octanedione, 3,5-octanedione, 2,4-nonanedione, 3,5-nonanedione, 5-methyl-2,4-hexanedione, 2,2,6,6-tetramethyl-3,5-heptanedione, and 1,1,1,5,5,5-hexafluoro-2,4-heptanedione, and the like can be given.

As examples of the ester solvent, diethyl carbonate, ethylene carbonate, propylene carbonate, diethyl carbonate, methyl acetate, ethyl acetate, ã-butyrolactone, ã-valerolactone, n-propyl acetate, i-propyl acetate, n-butyl acetate, i-butyl acetate, sec-butyl acetate, n-pentyl acetate, sec-pentyl acetate, 3-methoxybutyl acetate, methylpentyl acetate, 2-ethylbutyl acetate, 2-ethylhexyl acetate, benzyl acetate, cyclohexyl acetate, methylcyclohexyl acetate, n-nonyl acetate, methyl acetoacetate, ethyl acetoacetate, ethylene glycol monomethyl ether acetate, ethylene glycol monoethyl ether acetate, diethylene glycol monomethyl ether acetate, diethylene glycol monoethyl ether acetate, diethylene glycol mono-n-butyl ether acetate, propylene glycol monomethyl ether acetate, propylene glycol monoethyl ether acetate, propylene glycol monopropyl ether acetate, propylene glycol monobutyl ether acetate, dipropylene glycol monomethyl ether acetate, dipropylene glycol monoethyl ether acetate, glycol diacetate, methoxy triglycol acetate, ethyl propionate, n-butyl propionate, i-amyl propionate, diethyl oxalate, di-n-butyl oxalate, methyl lactate, ethyl lactate, n-butyl lactate, n-amyl lactate, diethyl malonate, dimethyl phthalate, diethyl phthalate, and the like can be given.

As examples of the ether solvent, ethyl ether, i-propyl ether, n-butyl ether, n-hexyl ether, 2-ethylhexyl ether, ethylene oxide, 1,2-propylene oxide, dioxolane, 4-methyldioxolane, dioxane, dimethyldioxane, ethylene glycol diethyl ether, ethylene glycol dibutyl ether, diethylene glycol diethyl ether, diethylene glycol di-n-butyl ether, tetraethylene glycol di-n-butyl ether, tetrahydrofuran, 2-methyltetrahydrofuran, propylene glycol dimethyl ether, propylene glycol diethyl ether, propylene glycol dipropyl ether, and the like can be given.

As examples of the amide solvent, acetamide, N-methylacetamide, N,N-dimethylacetamide, N-ethylacetamide, N,N-diethylacetamide, N-methylpropionamide, N-methylpyrrolidone, N-formylmorpholine, N-formylpiperidine, N-formylpyrrolidine, N-acetylmorpholine, N-acetylpiperidine, N-acetylpyrrolidine, and the like can be given.

As examples of other nonprotonic solvents, an aliphatic hydrocarbon solvent (e.g. n-pentane, i-pentane, n-hexane, i-hexane, n-heptane, i-heptane, 2,2,4-trimethylpentane, n-octane, i-octane, cyclohexane, and methylcyclohexane), an aromatic hydrocarbon solvent (e.g. benzene, toluene, xylene, ethylbenzene, trimethylbenzene, methylethylbenzene, n-propylbenzene, i-propylbenzene, o-diethylbenzene, i-butylbenzene, triethylbenzene, di-i-propylbenzene, n-amylnaphthalene, and trimethylbenzene), a sulfur-containing solvent (e.g. dimethyl sulfide, diethyl sulfide, thiophene, tetrahydrothiophene, dimethylsulfoxide, sulfolane, and 1,3-propanesultone), acetonitrile, dimethylsulfoxide, N,N,N',N'-tetraethylsulfonamide, hexamethylphosphoric acid triamide, N-methylmorphorone, N-methylpyrrole, N-ethylpyrrole, N-methyl-3-pyrroline, N-methylpiperidine, N-ethylpiperidine, N,N-dimethylpiperazine, N-methylimidazole, N-methyl-4-piperidone, N-methyl-2-piperidone, N-methyl-2-pyrrolidone, 1,3-dimethyl-2-imidazolidinone, 1,3-dimethyltetrahydro-2 (1H)-pyrimidinone, and the like can be given.

In particular, the ketone solvent such as butyl acetate, diethyl ketone, or cyclohexanone is preferable.

4. Film and film formation method

A method of forming a film according to one embodiment of the invention includes applying the above film-forming composition to a substrate to form a film, and heating the resulting film. The heating temperature may be determined depending on the type and the concentration of the novel carbosilane included in the film-forming composition. The heating temperature is preferably 30 to 450°C, and still more preferably 200 to 420°C. The heating step may be performed in an inert gas atmosphere or under reduced pressure. It suffices that the inert gas be inert to at least the novel polycarbosilane included in the film-forming composition during film formation. As examples of the inert gas, argon, nitrogen, and the like can be given. The reduced pressure is preferably 0 to 100 torr, and still more preferably 0 to 50 torr.
A method of forming a film according to one embodiment of the invention may include applying the above film-forming composition to a substrate to form a film, and applying high energy rays to the resulting film. As examples of the high energy rays, radiation such as electron beams and ultraviolet rays can be given.
For example, a film may be formed by heating the film obtained by applying the film-forming composition including the novel polycarbosilane to a substrate in an inert gas atmosphere or under reduced pressure, or applying high energy rays to the film.
A film according to one embodiment of the invention may be formed by the above method of forming a film. Therefore, the film according to one embodiment of the invention exhibits excellent etching resistance and solvent resistance and has a low relative dielectric constant. Therefore, the film according to one embodiment of the invention is suitable as a hard mask such as an etching stopper or a CMP stopper.

5. Example

Examples of the invention are described below. However, the invention is not limited to the following examples. Evaluation of experimental examples and comparative examples was carried out according to the following methods.

5.1 Measurement conditions

5.1.1 Relative dielectric constant

An aluminum electrode pattern was formed on the resulting film by using a deposition method to prepare a relative dielectric constant measurement sample. The relative dielectric constant of the film was measured by a CV method at a frequency of 100 kHz using an electrode "HP16451B" and a precision LCR meter "HP4284A" manufactured by Yokogawa Hewlett-Packard.

5.1.2 Hardness and modulus of elasticity (Young's modulus)

A Berkovich type indenter was installed in a nanohardness tester ("Nanoindenter XP" manufactured by MTS), and the universal hardness of the resulting film was measured. The modulus of elasticity was measured by using a continuous stiffness measurement method.

5.1.3 Solvent resistance

The solvent resistance of the resulting film was evaluated as follows. An 8-inch wafer on which the film was formed was immersed in cyclohexanone at room temperature for one minute, and a change in the thickness of the film before and after immersion was observed. The solvent resistance was judged to be excellent when the residual film rate defined below was 99% or more.

$$\text{Residual film rate (\%)} = \text{(film thickness after immersion)} / \text{(film thickness before immersion)} \times 100$$

5.1.4 Etching resistance

The resulting film was etched by using an etching system ("Unity II" manufactured by Tokyo Electron Limited).
A film formed on a silicon wafer in each of Experimental Examples 1 to 4 and Comparative Examples 1 to 5

was etched by using the above etching system, and a thickness "a" etched per unit time was measured. A film formed on a silicon wafer using a film-forming composition F obtained in Synthesis Example 6 was etched under the same conditions as those for the above film, and a thickness "b" etched per unit time was measured. The etching selectivity ratio "b/a" obtained by dividing "b" by "a" was taken as the etching resistance evaluation index.

5.2 Experimental Results

5.2.1 Synthesis Example 1

30 g of chloromethyltrichlorosilane was dissolved in 300 ml of THF. The resulting solution was added dropwise to 100 ml of THF containing 10 g of magnesium at room temperature in two hours. The reaction solution was allowed to react at 60°C for 10 hours. Then, 10 ml of a 1.0M THF solution of magnesium vinyl bromide was added dropwise to the solution at room temperature. After removing magnesium salts produced, 50 g of lithium aluminum hydride was added to the solution in an ice bath. Then, the mixture was allowed to react at room temperature for 10 hours. After deactivating the reaction solution by adding 100 ml of a 3M hydrochloric acid aqueous solution in an ice bath, the organic phase and the aqueous phase were separated. The organic phase was concentrated to obtain 9.5 g of a polymer A having a weight average molecular weight of 2,200. The polymer A had a carbon-carbon double bond to which a silicon-hydrogen bond may be added.

5.2.2 Synthesis Example 2

8 g of commercially available polycarbosilane having a silicon-hydrogen bond ("NIPUSI Type-S" manufactured by Nippon Carbon Co., Ltd.) and 2 g of the polymer A were dissolved in 100 ml of toluene. The mixture was allowed to react at 110°C for 20 hours. After cooling the reaction solution, the reaction solution was concentrated under reduced pressure to obtain 9.8 g of a novel polycarbosilane B. The weight average molecular weight of the novel polycarbosilane B was 9,600.

The following general formula (15) shows the structure of the raw material polycarbosilane used in Synthesis Example 2. In the general formula (15), x is 40% (0.4) and y is 60% (0.6).

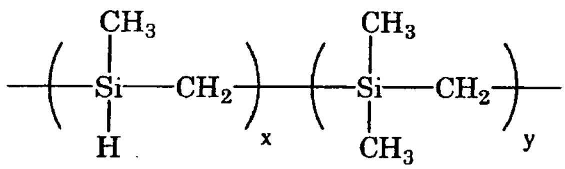

(15)

5.2.3 Synthesis Example 3

50 g of a 10% toluene solution of the novel polycarbosilane B was poured into 400 g of methanol with stirring to effect reprecipitation. The precipitate was dried under reduced pressure to obtain 3.4 g of a novel polycarbosilane C having a weight average molecular weight of 23,000.

5.2.4 Synthesis Example 4

8 g of commercially available polycarbosilane having a silicon-hydrogen bond ("NIPUSI Type-A" manufactured by Nippon Carbon Co., Ltd.) and 0.8 g of dimethyldivinylsilane were dissolved in 90 ml of toluene. After the addition of 0.05 g of chloroplatinic acid hexahydrate, the mixture was allowed to react at 60°C for 20 hours. After cooling the reaction solution, the reaction solution was concentrated under reduced pressure to obtain 8.6 g of a novel polycarbosilane D. The weight average molecular weight of the polycarbosilane D was 7,500.

The structure of the raw material polycarbosilane used in Synthesis Example 4 was the same as the structure of the raw material polycarbosilane used in Synthesis Example 2 (general formula (15)).

5.2.5 Synthesis Example 5

50 g of a 10% toluene solution of the novel polycarbosilane D was poured into 400 g of methanol with stirring to effect reprecipitation. The precipitate was dried under reduced pressure to obtain 3.1 g of a novel polycarbosilane E having a weight average molecular weight of 15,000.

5.2.6 Synthesis Example 6

A polysiloxane compound for etching selectivity ratio measurement was obtained by the following method. A separable flask made of quartz was charged with 570 g of distilled ethanol, 160 g of ion-exchanged water, and 30 g of a 10% tetramethylammonium hydroxide aqueous solution. The mixture was then uniformly stirred. After the addition of a mixture of 136 g of methyltrimethoxysilane and 209 g of tetraethoxysilane to the solution, the mixture was allowed to react at 55°C for two hours. After the addition of 300 g of propylene glycol monopropyl ether to the solution, the mixture was concentrated at 50°C by using an evaporator while immersing the flask in a water bath at 50°C until the solid content became 10% (converted into complete hydrolysis-condensation product). Then, 10 g of a 10% propylene glycol monopropyl ether solution of acetic acid was added to obtain a coating liquid. The coating liquid was filtered through a Teflon (registered trademark) filter with a pore size of 0.2 im to obtain a polysiloxane compound film-forming composition F.

The film-forming composition F was applied to an 8-inch silicon wafer by spin coating, and sintered at 400°C to obtain a polysiloxane insulating film (low-k film) (thickness: 400 nm, dielectric constant: 2.3).

5.2.7 Experimental Example 1

The novel polycarbosilane B was dissolved in cyclohexanone to prepare a composition solution with a solid content of 10%. The composition solution was applied to an 8-inch silicon wafer by spin coating to obtain a film with a thickness of 0.5 im (see Table 1). The wafer was sintered on a hot plate at 90°C for three minutes, at 200°C for three minutes in a nitrogen atmosphere, and at 400°C for 60 minutes in a nitrogen atmosphere (see Table 1). The film obtained after sintering was evaluated by the above-described evaluation methods. The results are shown in Table 2.

5.2.8 Experimental Example 2

A film was prepared in the same manner as in Experimental Example 1 except for using the novel polycarbosilane C instead of the novel polycarbosilane B (see Table 1). The film obtained after sintering was evaluated by the above-described evaluation methods. The results are shown in Table 2.

5.2.9 Experimental Example 3

A film was prepared in the same manner as in Experimental Example 1 except for using the novel polycarbosilane D instead of the novel polycarbosilane B (see Table 1). The film obtained after sintering was evaluated by the above-described evaluation methods. The results are shown in Table 2.

5.2.10 Experimental Example 4

A film was prepared in the same manner as in Experimental Example 1 except for using the novel polycarbosilane E instead of the novel polycarbosilane B (see Table 1). The film obtained after sintering was evaluated by the above-described evaluation methods. The results are shown in Table 2.

5.2.11 Comparative Example 1

A film was prepared in the same manner as in Experimental Example 1 except for using the polymer A instead of the novel polycarbosilane B (see Table 1). The film obtained after sintering was evaluated by the above-described evaluation methods. The results are shown in Table 2.

5.2.12 Comparative Example 2

A film was prepared in the same manner as in Experimental Example 1 except for using commercially available polycarbosilane ("NIPUSI Type-S") instead of the novel polycarbosilane B (see Table 1). The film obtained after sintering was evaluated by the above-described evaluation methods. The results are shown in Table 2.

5.2.13 Comparative Example 3

A film was prepared in the same manner as in Experimental Example 1 except for using commercially available polycarbosilane ("NIPUSI Type-A") instead of the novel polycarbosilane B (see Table 1). The film obtained after sintering was evaluated by the above-described evaluation methods. The results are shown in Table 2.

5.2.14 Comparative Example 4

A film was prepared in the same manner as in Experimental Example 1 except for using a solution prepared by mixing 8 g of commercially available polycarbosilane ("NIPUSI Type-S") and 2 g of the polymer A in 90 g of cyclohexanone instead of the novel polycarbosilane B (see Table 1). The film obtained after sintering was evaluated by the above-described evaluation methods. The results are shown in Table 2.

5.2.15 Comparative Example 5

A film was prepared in the same manner as in Experimental Example 1 except for using a solution prepared by mixing 8 g of commercially available polycarbosilane ("NIPUSI Type-A"), 0.8 g of divinyldimethylsilane, and 0.05 g of chloroplatinic acid hexahydrate in 80 g of cyclohexanone instead of the novel polycarbosilane B (see Table 1). The film obtained after sintering was evaluated by the above-described evaluation methods. The results are shown in Table 2.

TABLE 1

| | Film thickness (nm) | Film treatment condition |
|---|---|---|
| Experimental Example 1 | 500 | Sintering |
| Experimental Example 2 | 500 | Sintering |
| Experimental Example 3 | 500 | Sintering |
| Experimental Example 4 | 500 | Sintering |
| Comparative Example 1 | 500 | Sintering |
| Comparative Example 2 | 500 | Sintering |
| Comparative Example 3 | 500 | Sintering |
| Comparative Example 4 | 500 | Sintering |
| Comparative Example 5 | 500 | Sintering |

TABLE 2

| | Relative dielectric constant | Modulus of elasticity (GPa) | Hardness (GPa) | Residual film rate (%) | Etching selectivity ratio |
|---|---|---|---|---|---|
| Experimental Example 1 | 3.0 | 6.9 | 0.8 | 100 | 6.1 |
| Experimental Example 2 | 2.8 | 7.8 | 0.9 | 100 | 6.8 |
| Experimental Example 3 | 3.1 | 7.2 | 0.8 | 100 | 6.2 |
| Experimental Example 4 | 2.9 | 7.7 | 0.8 | 100 | 6.8 |
| Comparative Example 1 | 3.4 | 5.6 | 0.6 | 100 | 4.5 |
| Comparative Example 2 | 2.7 | 4.3 | 0.5 | 6 | 6.3 |

Table continued

| | Relative dielectric constant | Modulus of elasticity (GPa) | Hardness (GPa) | Residual film rate (%) | Etching selectivity ratio |
|---|---|---|---|---|---|
| Comparative Example 3 | 2.7 | 4.2 | 0.5 | 5 | 6.4 |
| Comparative Example 4 | 3.0 | 6.7 | 0.7 | 80 | 6.0 |
| Comparative Example 5 | 3.1 | 6.9 | 0.6 | 76 | 5.9 |

The films obtained in Experimental Examples 1 to 4 were formed by using the film-forming composition including the novel polycarbosilane of the invention. The novel polycarbosilane of the invention was formed by the method including reacting the polycarbosilane (A) having a silicon-hydrogen bond and the compound (B) having a carbon-carbon multiple bond to which a silicon-hydrogen bond may be added. As a result, the films obtained in Experimental Examples 1 to 4 exhibit excellent etching resistance, solvent resistance, modulus of elasticity, and hardness in comparison with the films formed by using the film-forming compositions containing the polycarbosilane produced without the above reaction step (Comparative Examples 1 to 5). Therefore, it was confirmed that the films obtained in Experimental Examples 1 to 4 are low-relative-dielectric-constant films exhibiting excellent mechanical strength. According to Experimental Examples 1 to 4, films exhibiting excellent solvent resistance were obtained by heating the film in an inert gas (nitrogen) atmosphere.

Although only some embodiments of the present invention have been described in detail above, those skilled in the art will readily appreciate that many modifications are possible in the embodiments without materially departing from the novel teachings and advantages of this invention. Accordingly, all such modifications are intended to be included within scope of this invention.

A method of producing a polycarbosilane includes reacting (A) a polycarbosilane having a silicon-hydrogen bond and (B) a compound having a carbon-carbon multiple bond to which a silicon-hydrogen bond may be added.

**Claims**

1. A method of producing a polycarbosilane, comprising reacting (A) a polycarbosilane having a silicon-hydrogen bond and (B) a compound having a carbon-carbon multiple bond to which a silicon-hydrogen bond is addable.

2. The method of producing a polycarbosilane according to claim 1, wherein the reaction is carried out by stirring the components in (C) an organic solvent with heating.

3. The method of producing a polycarbosilane according to claim 1 or 2, wherein the reaction is hydrosilylation.

4. The method of producing a polycarbosilane according to any one of claims 1 to 3, wherein the polycarbosilane (A) has a main chain in which silicon atoms and carbon atoms are alternately repeated, and includes a repeating unit shown by the following general formula (1) and a repeating unit shown by the following general formula (2).

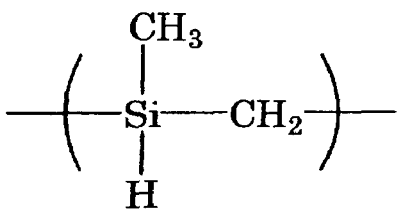

(1)

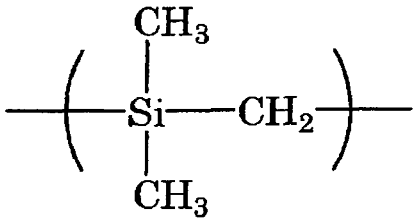

(2)

**5.** The method of producing a polycarbosilane according to claim 4, wherein the polycarbosilane (A) further includes at least one of repeating units shown by the following general formulas (3) to (5).

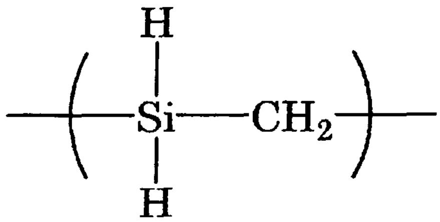

(3)

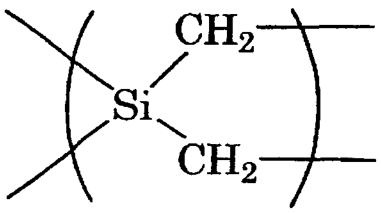

(4)

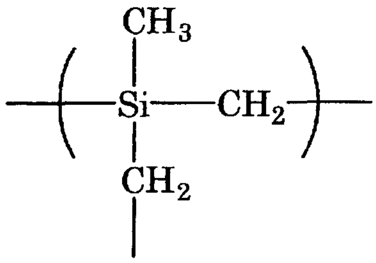

(5)

6. The method of producing a polycarbosilane according to claim 4 or 5, wherein, in the polycarbosilane (A), a ratio of a number of carbon atoms bonded to silicon atoms to a number of silicon atoms is two or more.

7. The method of producing a polycarbosilane according to any one of claims 4 to 6, wherein the polycarbosilane (A) has a weight average molecular weight of 300 to 1,000,000 and is soluble in an organic solvent.

8. The method of producing a polycarbosilane according to any one of claims 4 to 7, wherein the polycarbosilane (A) is obtained by a mechanism including a rearrangement reaction of polydimethylsilane.

9. The method of producing a polycarbosilane according to any one of claims 1 to 8, wherein the compound (B) has at least two carbon-carbon multiple bonds.

10. The method of producing a polycarbosilane according to claim 9, wherein the compound (B) is a polymer having a weight average molecular weight of 300 to 1,000,000.

11. A polycarbosilane produced by using the method according to any one of claims 1 to 10.

12. A polycarbosilane produced by removing a component having a weight average molecular weight of 500 or less from the polycarbosilane according to claim 11.

13. A film-forming composition comprising the polycarbosilane according to claim 11 or 12.

14. A film-forming composition comprising the polycarbosilane according to claim 11 or 12 and (E) a solvent.

15. A method of forming a film, comprising applying the film-forming composition according to claim 13 or 14 to a substrate to form a film, and heating the film.

16. The method of forming a film according to claim 15, wherein the heating step is performed in an inert gas atmosphere or under reduced pressure.

17. A method of forming a film, comprising applying the film-forming composition according to claim 13 or 14 to a substrate to form a film, and applying high energy rays to the film.

18. A film formed by using the method according to any one of claims 15 to 17.

European Patent Office

# EUROPEAN SEARCH REPORT

Application Number
EP 05 02 5714

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 719 273 A (SEYFERTH ET AL) 12 January 1988 (1988-01-12) examples O,P,Q,R,S and tables 13-16 in columns 21-24 * claims 2-17,19-38,40-70 * | 1-3,7, 9-14 | C08G77/60 |
| X,D | US 5 260 377 A (WEBER ET AL) 9 November 1993 (1993-11-09) * claims; examples 5-11 * | 1,3,9, 11-16,18 | |
| X,D | US 5 171 792 A (WEBER ET AL) 15 December 1992 (1992-12-15) * examples 6,7,10 * | 11-16,18 | |
| | | | TECHNICAL FIELDS SEARCHED (IPC) |
| | | | C08G |

The present search report has been drawn up for all claims

| Place of search | Date of completion of the search | Examiner |
|---|---|---|
| Munich | 29 March 2006 | Kolitz, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

**ANNEX TO THE EUROPEAN SEARCH REPORT ON EUROPEAN PATENT APPLICATION NO.** EP 05 02 5714

This annex lists the patent family members relating to the patent documents cited in the above-mentioned European search report.
The members are as contained in the European Patent Office EDP file on
The European Patent Office is in no way liable for these particulars which are merely given for the purpose of information.

29-03-2006

| Patent document cited in search report | | Publication date | Patent family member(s) | | Publication date |
|---|---|---|---|---|---|
| US 4719273 | A | 12-01-1988 | CA | 1272834 A1 | 14-08-1990 |
| | | | EP | 0217539 A1 | 08-04-1987 |
| US 5260377 | A | 09-11-1993 | NONE | | |
| US 5171792 | A | 15-12-1992 | NONE | | |

EPO FORM P0459

For more details about this annex : see Official Journal of the European Patent Office, No. 12/82